# EUROPEAN PATENT APPLICATION

(11) **EP 1 994 909 A1**
(43) Date of publication of application: **26.11.2008**
(21) Application number: 07010035.9
(22) Date of filing: 21.05.2007
(51) Int. Cl.: A61C 8/00, A61C 1/08

(54) **Try-in implant**

(71) Applicant: Straumann Holding AG, 4002 Basel (CH)
(72) Inventor: Lussi, Jost, CH-8006 Zürich (CH); Lazic, Miodrag, CH-4436 Oberdorf (CH)
(74) Representative: Schaad, Balass, Menzl & Partner AG

(57) **Abstract**

The present invention relates to a try-in implant for verifying position and angulation of a pilot hole and thereby having an impression of the final implant position. Said try in implant comprises a body portion to be received in said pilot hole, a neck portion formed above said body portion, and an attachment portion formed above said neck portion. Said attachment portion comprises a handle to ensure easy and safe handling of said try-in implant.

## Description

The present invention relates to a try-in implant for verifying position and angulation of a pilot hole.

When installing dental implants, the positioning of the implant is extremely important to obtain a good aesthetic and functional result. The positioning of the implant to a large extent determines the choice of prosthetic components. In order to provide guidance for the surgeon during the installation of an implant, various types of so-called surgical guide rails have traditionally been used. These guide rails are mainly produced under laboratory conditions and can be made in a number of different designs. As aids during the surgical intervention it is also possible to use so-called directional sensors.

US 5,208,845 discloses a radiographic depth gauge for positioning dental implants in a jaw bone. The gauge is formed of a material, which is x-ray visible, and is an elongated member with distance markings. The gauge both shows the depth and angulation of the drill hole relative to other holes and existing dentition.

US 5,842,859 discloses an indication device for marking and forming one or more attachment points for one or more fixtures, which can be fitted into a receiving hole in which it bears via a bearing part. At least one indicating part is interconnected with the protruding part and has a free end extending away from the existing hole, where a location of the new hole to be used as an attachment point is established at a position substantially adjacent to an exterior surface of the free end of the indicating part.

However, the devices known up to now have the disadvantage that the surgeon has no visual impression, which indicates the implant's prosthetic portion as well as the fact that they are difficult to handle due to their small size.

Therefore, it was a problem of the present invention to provide a try-in implant which indicates the exact geometry of the implant's prosthetic portion and which is easy and safe to handle.

The problem is solved by a try-in implant according to claim 1. Further preferred embodiments are subject of dependent claims 2 to 15.

Said try-in implant comprises a body portion to be received in a pilot hole, a neck portion formed above said body portion, and an attachment portion formed above said neck portion. Said attachment portion comprises a handle to ensure easy and safe handling of said try-in implant. The try-in implant according to the present invention fulfills the needs of the surgeon by ensuring a safe handling and allowing a direct visual impression of the situation during the early phase of implant surgery allowing to adjust the position of the hole or to select the correct implant system.

Said try-in implant indicates the geometry of the implant's prosthetic portion. That means that it has the same shape as an implant (final implant) comprising an anchoring part with a threaded section, a neck portion as well as a mounting part. Due to the visual similarity of the try-in implant and the final implant, the surgeon has during the surgical intervention a visual impression of the situation after implantation which makes the decision easier, which implant has to be selected. An implant to be chosen may be a one-part implant or a two-part implant, it may have a straight or angulated mounting part and the length and/or diameter of the implant to be selected may also be determined.

The facial-lingual, mesial-distal, corona-apical and apical-incisal position as well as the distance to adjacent teeth and implants can be verified with a try-in implant according to the present invention. Functional and aesthetic long-term results can be predicted due to the use of such a try-in implant.

The handle on the attachment portion ensures that the try-in implant can easily be inserted in the pilot hole, that means the first receiving hole or drill hole, by hand or by tweezers without being lost in the patient's mouth, thereby ensuring a safe handling.

In a preferred embodiment of the present invention the handle is attached on the top or on the side of the attachment portion. Depending on his preferences the surgeon may choose between try-in implants having the handle on the top or on the side of the attachment portion. Preferably the handle is on the side of the attachment portion, since this allows a better estimation of the correct height. Further also an occlusal control is possible.

In another preferred embodiment of the present invention the handle is an integral part of the attachment portion by at least partly gripping the surface of the attachment portion to ensure that the try-in implant can not slip away during the handling procedure in the patient's mouth. Alternatively the attachment portion comprises a suitable cavity to guarantee a safe handling of said try-in implant with an integrated handle. Said cavity may vary in size and shape. For example it is such that the gripping ends of the tweezers fit into the cavity. These two embodiments are especially preferred, since an integrated handle has no influence of the visual impression.

In another preferred embodiment of the present invention the handle comprises an opening for the prevention of aspiration. A thread or floss may be inserted through the opening and held outside a patient's mouth. In addition, the thread or floss can be used to assist in removing the try-in implant.

Depending on the pilot hole it may be necessary to select an implant with a straight or an angled abutment. Due to the fact, that the try-in implant according to the present invention exists with a straight or angled attachment portion the surgeon may have a visual impression of both implant types. Therefore, the selection of the optimal implant is easier.

Preferably, the try-in implants have the same diameters as the drills. That means that they have diameters from 1.0 to 8.0 mm, preferably consisting of the group of 2.2 mm, 2.8 mm, 3.0 mm, 3.5 mm, 4.2 mm, 5 mm and 5.5 mm. Especially preferred are those having a diameter from 2.0 to 3.0 mm, for example 2.2 mm and 2.8 mm.

In order to predict the optimal length of the implant, the body of try-in implant may have different length, preferably 6 mm and 8 mm. It is also possible that the try-in implants comprise a height indicator, designed with horizontal or lacuna markings. Such a height indicator makes it possible to decide whether an adjustment of the pilot hole is necessary, respectively which implant length has to be chosen.

Preferably the try-in implants according to the present invention have, depending on their diameter and size, a specific color, which serves as color code. Alternatively they have a tooth-like colour to support the visual impression.

In one embodiment of the present invention the try-in implant comprises mainly a metal selected from the group consisting of titanium, zirconium, stainless steel preferably titanium or stainless steel. Alternatively the implants comprise an alloy of metals selected from the group consisting of cobalt, chromium, titanium, zirconium, niobium, hafnium or tantalum. Most preferred are 316 stainless steel, Ti6A14V, Ti6A17Nb and a Cr-Co alloy.

In another embodiment of the present invention the try-in implant is made of a synthetic material. The synthetic material is selected from the group consisting of ceramic such as aluminium oxide or zirconium oxide, composite materials as well as polymers, especially biocompatible USP Class 6 compliant polymers, such as PEEK (polyetheretherketone), POM(polyoxymethylene), Grilamid TR 70 LX of EMS, PEI of Sulzer Medica (polyethylene imine), PTFE (polytetrafluorethylene), PP (polypropylene), PMP (Polymethylpenten), PPSU (polyphenylsulfone), PE (polyethylene), and PC (polycarbonate). Preferably the implant is made of PEEK or POM.

Typically, series of x-rays are taken in order to determine where and how to position implants in the jaw bone without damaging surrounding structures such as the nerves in the lower jaw bone and the sinuses adjacent to the upper jaw bone. Based on said x-ray the pilot hole is drilled in the jaw bone. If, according to a further embodiment of the present invention, the try-in implant is made of a metal or synthetic material, which is X-ray visible, a further x-ray can be taken to determine the angulation of the pilot hole relative to existing dentition and the depth of the pilot hole relative to anatomical restriction. A possible synthetic material, which is X-ray visible, is BaSO₄ containing PEEK or ZrO₂ itself. X-ray visibility of the try-in implant according to the present invention permits optimal selection of the implant (one-part vs. two-part, straight or angled abutment as well as length of the implant) as well as the precision placement of implants to their maximum depth in the jaw bone to assure a maximum strength supporting for one or more dental restorations.

In one embodiment of the present invention the try-in implants can be sterilized and therefore be used several times. Alternatively, it is possible to produce the try-in implants made of a synthetic material as one-way product guaranteeing a sterile product which is highly desired by consumers due to infection risks such as HIV or hepatitis.

The invention is explained below on the basis of figures and illustrative embodiments, without in any way limiting the invention to the embodiments shown. The drawings show the following:
- Fig. 1: a one-part implant according to the state of the art;
- Fig. 2: a side view of a first embodiment of a try-in implant according to the invention;
- Fig. 3: a side view of an embodiment of a try-in implant according to the invention slightly modified with respect to the embodiment of Fig. 2;
- Fig. 4: a side view of a further embodiment of a try-in implant according to the invention, wherein the handle is an integral part of the attachment portion;
- Fig. 5: a side view of a further embodiment of a try-in implant according to the invention, wherein the attachment portion is angulated and the neck portion is anatomically shaped;
- Fig. 6: a side view of a further embodiment of a try-in implant according to the invention with an opening to prevent aspiration;
- Fig. 7: a side view of the embodiment shown in figure 6 with thread or floss.

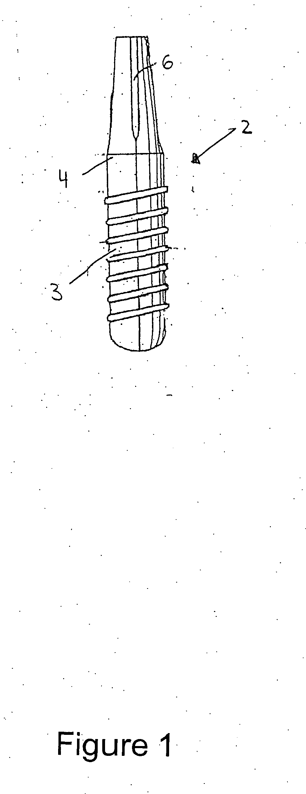

Figure 1 shows one possible embodiment of a final implant in form of a one-part implant 2 according to the state of the art. It comprises an anchoring part 3 with a threaded section, a neck part 4 and a mounting part 6.

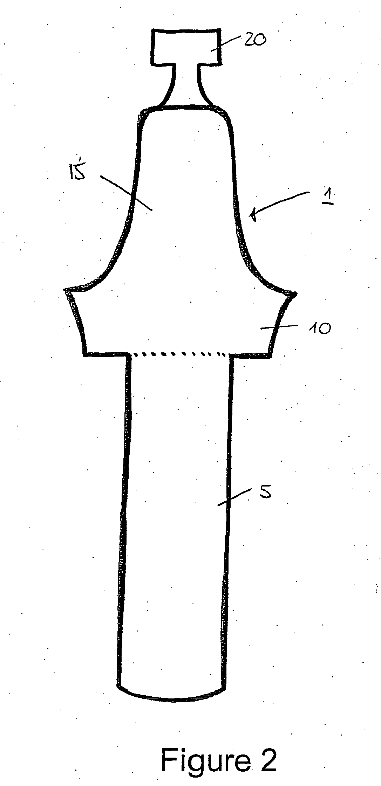

Figure 2 shows a try-in implant 1 according to the present invention. Said try-in implant 1 comprises a body portion 5 to be received in a pilot hole. The body portion 5 having a length of about 6 to 8 mm corresponds to the drill hole and subsequently the anchoring part 3 of the final implant. At the upper end of the body portion 5 a neck portion 10 having a length of about 1 mm is formed which may comprise a slightly enlarged conical section. Above said neck portion 10 an attachment portion 15 having a length of about 1 to 6 mm is formed, which corresponds to the mounting part 6 of the final, implant. Said attachment portion 15 comprises a handle 20 which ensures easy and safe handling of said try-in implant 1. The handle may have various forms, which can easily be gripped by hand or by tweezers, such as T-shape, triangular, rectangular, squarish or semicircular. Preferably the handle has a gripping surface. In the embodiment shown in Figure 2 the handle 20 is mounted on the top of the attachment portion 15. The try-in implant 1 is made of a biocompatible metal or synthetic material as mentioned above. Preferably it is made of PEEK or POM.

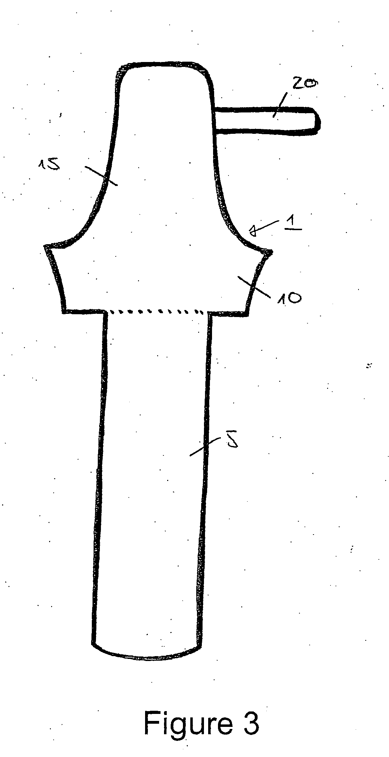

Figure 3 shows a slightly modified embodiment of a try-in implant 1, which again comprises a body portion 5, a neck portion 10 and an attachment portion 15. The handle 20 is mounted on the side of the attachment portion 20.

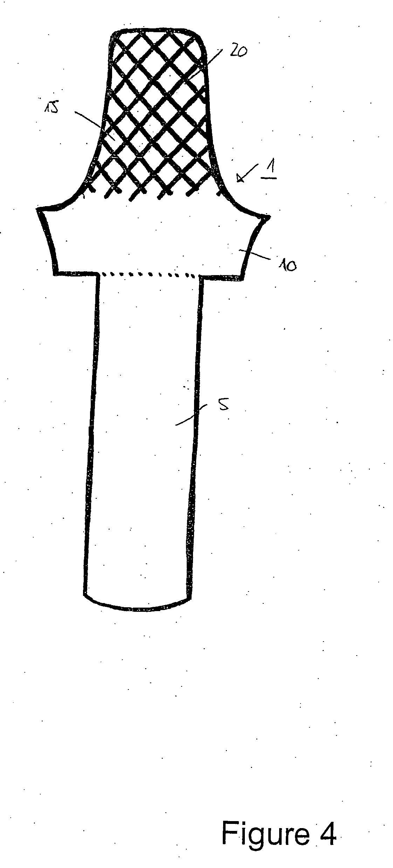

Figure 4 shows a try-in implant 1 comprising a body portion 5, a neck portion 10 and an attachment portion 15. The handle 20 is an integral part of the attachment portion 15. In order to ensure an optimal gripping of the try-in implant 1, the integrated handle has a gripping surface.

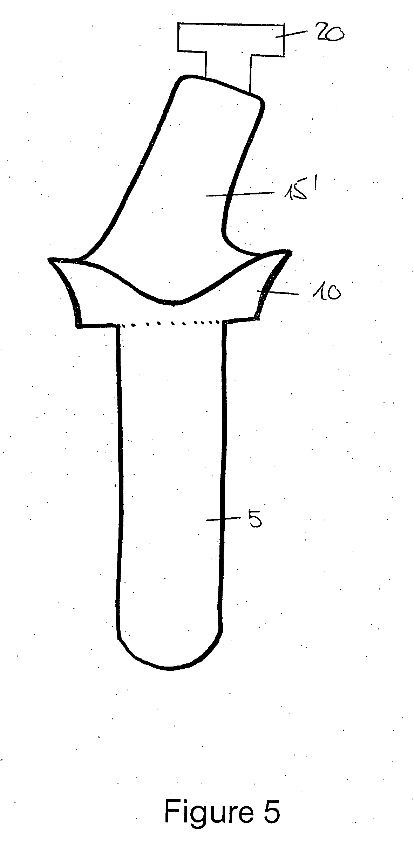

Figure 5 shows contrary to the embodiments shown in figures 1 to 3 a try-in implant 1 with an angulated attachment portion 15'. Such a try-in implant 1 allows the surgeon to decide whether it is better to use an implant with a straight or angulated abutment.

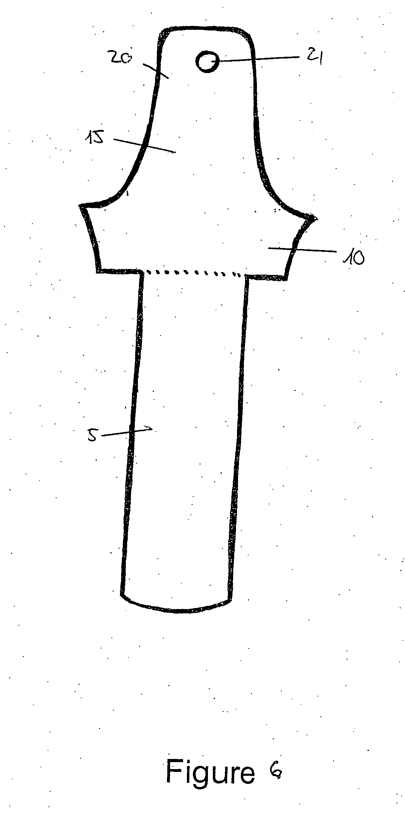

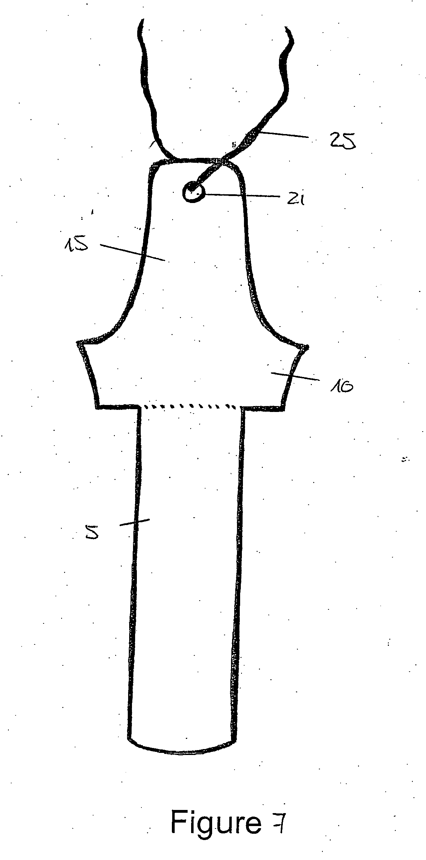

Figure 6 shows a try-in implant 1, comprising a body portion 5, a neck portion 10 and an attachment portion 15. The handle 20 is an integral part of the attachment portion 15 and comprises an opening 21 for the prevention of aspiration. A thread or floss 25, as shown in Figure 7 may be inserted through the opening 21 and held outside the patient's mouth. Additionally, the thread or floss may be used to assist in removing the try-in implant in a safe and quick way.

## Claims

1. Try-in implant (1) for verifying position and angulation of a pilot hole, said try-in implant (1) comprising
a body portion (5) to be received in said pilot hole,
a neck portion (10) formed above said body portion, and an attachment portion (15) formed above said neck portion, **characterized in that** said attachment portion (15) comprises a handle (20).

2. Try-in implant (1) according to claim 1, **characterized in that** the handle (20) is attached on the top of the attachment portion (15).

3. Try-in implant (1) according to claim 1, **characterized in that** the handle (20) is attached on the side of the attachment portion (15).

4. Try-in implant (1) according to claim 1, **characterized in that** the handle (20) is an integral part of the attachment portion (15) whereby the attachment portion (15) has a gripping surface.

5. Try-in implant (1) according to claim 1, **characterized in that** the handle (20) is an integral part of the attachment portion (15), whereby said attachment portion comprises a cavity.

6. Try-in implant (1) according to any of the preceding claims, **characterized in that** the handle (20) comprises an opening (21) for the prevention of aspiration.

7. Try-in implant (1) according to any of the preceding claims, **characterized in that** the attachment portion is straight or angulated.

8. Try-in implant (1) according to any of the preceding claims, **characterized in that** the body portion has a length of 6 to 8 mm.

9. Try-in implant (1) according to any of the preceding claims, **characterized in that** the body portion comprises height indicators.

10. Try-in implant (1) according to any of the preceding claims, **characterized in that** the body portion has a diameter from 1.0 to 8 mm.

11. Try-in implant (1) according to any of the preceding claims, **characterized in that** the implant is made of metal or a synthetic material.

12. Try-in implant (1) according to claim 10, **characterized in that** the implant is made of a synthetic material selected from the group consisting of ceramic, composite materials and polymers, preferably polymers selected from the group consisting of PEEK, POM, Grilamid TR 70 LX, PEI, PTFE, PP, PMP, PPSU, PE, and PC.

13. Try-in implant (1) according to claim 12, **characterized in that** the implant is made of PEEK or POM.

14. Try-in implant (1) according to claim 12 or 13, **characterized in that** the synthetic material is X-ray visible.

15. Try-in implant (1) according to any of the proceeding claims, **characterized in that** it can be sterilized.

16. One-way try-in implant (1) according to any of the claims 12 to 14.
